# EUROPÄISCHE PATENTSCHRIFT

(11) **EP 1 481 278 B1**
(45) Veröffentlichungstag und Bekanntmachung des Hinweises auf die Patenterteilung: **13.08.2008**
(21) Anmeldenummer: 03714667.7
(22) Anmeldetag: 04.03.2003
(51) Int. Cl.: G02B 25/00

(54) **OPTISCHE SEHHILFE**
OPTICAL VISUAL AID
AIDE VISUELLE OPTIQUE

(30) Priorität: 07.03.2002 DE 20203586 U
(43) Veröffentlichungstag der Anmeldung: 01.12.2004
(73) Patentinhaber: A. Schweizer GmbH Optische Fabrik, D-91301 Forchheim (DE)
(72) Erfinder: SCHÜTTINGER, Alfred, 91336 Heroldsbach (DE)
(74) Vertreter: Hafner, Dieter
(86) Internationale Anmeldenummer: PCT/DE2003/000677
(87) Internationale Veröffentlichungsnummer: WO 2003/075073

(56) Entgegenhaltungen:
- DE-A- 19 753 393
- DE-A- 19 942 190
- PATENT ABSTRACTS OF JAPAN vol. 1998, no. 04, 31. März 1998 (1998-03-31) & JP 09 322045 A (SANYO ELECTRIC CO LTD), 12. Dezember 1997 (1997-12-12)

## Beschreibung

Die Erfindung/Neuerung betrifft eine optische Sehhilfe, insbesondere in Form einer Hand- oder Standlupe. Eine bekannte derartige optische Sehhilfe besteht in der Regel aus einem Gehäuse sowie einem in einem Abschnitt des Gehäuses befestigten vergrößernden optischen Element in Form eines Lupenglases. Darüber hinaus ist es bereits bekannt geworden, an dem Gehäuse ein elektronisches bilderfassendes System in Form einer Kamera anzuordnen.

Bei den bekannten optischen Sehhilfen mit Kamera ist diese als Schwarz-Weiß-Kamera ausgebildet. Dies führt bei relativ kontrastreichen zu vergrößernden optischen Strukturen zu ausreichenden Ergebnissen. Bei kontrastschwachen Vorlagen hat es sich aber herausgestellt, daß mit einer Schwarz-Weiß-Kamera-Ausstattung einer Hand- oder Standlupe der angestrebte Erfolg bei sehschwachen Personen nicht mehr erzielt werden kann.

Aus JP-A-2001 337 281 ist eine optischer Sehhilfe für medizinische Zwecke offenbart. Dieses Dokument offenbart ein Vergrößerungsglas mit einer abnehmbar befestigten Fernsehkamera, wobei die Beobachtungsachsen beider mehr oder weniger zusammenfallen. Aus DE 199 42 190 A1 ist eine Kameramaus bekannt, die ein unten offenes Gehäuse aufweist, in der eine Platinenkamera angeordnet ist. Um das Lesegut auszuleuchten, sind Infrarotbeleuchtungselemente auf der Platine vorgesehen. Ein optisches Vergrößerungselement in Form eines Lupenkorpers ist nicht vorgesehen.

DE 197 53 393 A1 offenbart eine elektronische Lupe, die einen elektronischen Bildaufnehmer und eine elektronische Anzeigeeinheit aufweist, die zusammen in einem Gehäuse derart untergebracht sind, daß beim Auflegen des Gehäuses auf eine zu beobachtende Fläche von der Anzeigeeinheit unmittelbar ein vergrößertes Abbild des vom Bildaufnehmer detektierten Bildes angezeigt wird. Eine Betrachtung des Lesegutes sowohl auf der Anzeigeeinheit als auch durch eine herkömmliche Vergrößerungslupe sind bei diesem Stand der Technik nicht möglich.

Der Erfindung/Neuerung liegt die Aufgabe zugrunde, eine optische Sehhilfe mit den Merkmalen des Oberbegriffes des Anspruches 1 derart auszubilden, daß das Kamerabild unabhängig von der Art der Vorlage auch bei stark sehbehinderten Menschen eine deutliche Verbesserung des Betrachtungsergebnisses herbeiführt. Diese Aufgabe wird durch die kennzeichnenden Merkmale des Anspruches 1 gelöst. Vorteilhafte Weiterbildungen der Erfindungen ergeben sich aus den Unteransprüchen 2-14.

Auch bei kontrastschwachen und insbesondere farbigen Vorlagen liefert eine Farbkamera in überraschender Weise besonders vorteilhafte Ergebnisse, weil mit einer Farbkamera durch eine farbige Ausleuchtung der Vorlage und/oder Ausblendung einzelner Farbkomponenten aus dem aus der Kamera kommenden Farb-Video-Signal eine sehr weitgehende Bild- und/oder Kontrastbearbeitung möglich ist. In Verbindung mit Elementen einer Farb-LED-Beleuchtung zusammen mit der Farbkamera auf einem gemeinsamen Träger, wird es auch stark sehbehinderten Menschen ermöglicht, kontrastschwache Vorlagen sicher zu erkennen. Die optische Achse der Kamera schließt zur optischen Achse des Lupenelementes einen Winkel ein, wodurch der von der Kamera erfaßte Bildausschnitt innerhalb des von der Lupe erfaßten Bildausschnittes liegt oder im wesentlichen dem von der Lupe erfaßten Bildausschnitt entspricht. Dabei spielt es insbesondere auch eine Rolle, daß die Augen von sehbehinderten Menschen auf bestimmte Farben empfindlicher reagieren als auf andere Farben. Durch Auswahl der Beleuchtungsfarbe und/oder Filterung des Video-Farbsignals lassen sich durch eine Kombination aus Farbkamera und durchstimmbarer Beleuchtungseinheit besonders gute Ergebnisse erzielen. Die durchstimmbare Beleuchtungseinheit ist als Farb-LED-Beleuchtung ausgebildet, eine Farb-LED-Beleuchtung kann durch unterschiedliche Spannungsansteuerung einer üblichen Farb-LED ("Full colour-RGB-LED-5mm", zu beziehen z. B. bei Fa. Conrad Elektronik GmbH, Best Nr. 185353-22, Typ LF 59) farblich durchgestimmt werden. Werden ein oder mehrere solche Farb-LEDs miteinander kombiniert oder zusammen mit kräftigen Weißlicht- LEDs benutzt, dann lassen sich in Verbindung mit einer Farbkamera optimierbare Kontrastergebnisse erzielen.

Dieser Träger kann in vorteilhafter Weiterbildung der Erfindung als Leiterplatine ausgebildet sein, auf der eine gemeinsame Steuerschaltung angesteuert werden kann, um die Farbkamera und die Beleuchtungs-LED mit Betriebsspannung zu versorgen und entsprechend der Farbe nach einzuregeln.

Eine solche Kamera kann peripher an einem Lupenträger befestigt werden. Mit Vorteil kann die Lupe dann in üblicher Weise ohne den Einsatz der Kamera benutzt werden.

Vorteilhaft ist es auch, an der optischen Sehhilfe eine manuell bedienbare Kontraststeuerung vorzusehen, die an einem Handgriff oder an einer gesonderten Gehäuseeinheit befestigt sein kann. Auch ein Farbsteuerschalter, mit dem entweder die Leuchtfarben der Farb-LEDs änderbar sind oder auch eine Farbfilterung des Farbsignals der Kamera vorgenommen werden kann, ist mit Vorteil vorgesehen. Ein solcher Farbsteuerschalter kann beispielsweise einen oder mehrere Schieberegler für die Grundfarben aufweisen. Außerdem kann ein derartiger Farbsteuerschalter auch mit Menütasten kombiniert werden, durch die voreinstellbare Filter-, Beleuchtungs-und/oder Farbkompositionen auswählbar sind.

Darüber hinaus kann die Brennweite der Linse der Kamera mit einem Zoom-Schalter verändert werden, so daß Bildausschnitte in unterschiedlicher Größe unterschiedliche betrachtet werden können.

Wird an der Kamera oder am Gehäuse ein kleiner Monitor oder ein kleines LCD-Display befestigt, dann es möglich, Einstellungen der Kamera, beispielsweise Fokus, Kontrast und dgl. direkt an der optischen Sehhilfe zu kontrollieren oder Menüabfolgeschritte auf dem Monitor oder dem Display darzustellen, wodurch die Bedienerführung der Kamera wesentlich erleichtert ist. Dies ist insbesondere dann bedeutungsvoll, wenn über eine Programmtaste unterschiedliche Beleuchtungs-und/oder Kontrastprogramme der Kamera ausgewählt werden können.

Weiterhin ist es vorteilhaft, wenn die Signale der Farbkamera drahtlos an ein Fernsehgerät oder an einen Monitor übertragen werden können. Außerdem werden für sehschwache Personen die Betrachtungsergebnisse durch eine an sich bekannte, ein Zittern aus dem Kamerabild eliminierende Elektronikschaltung verbessert.

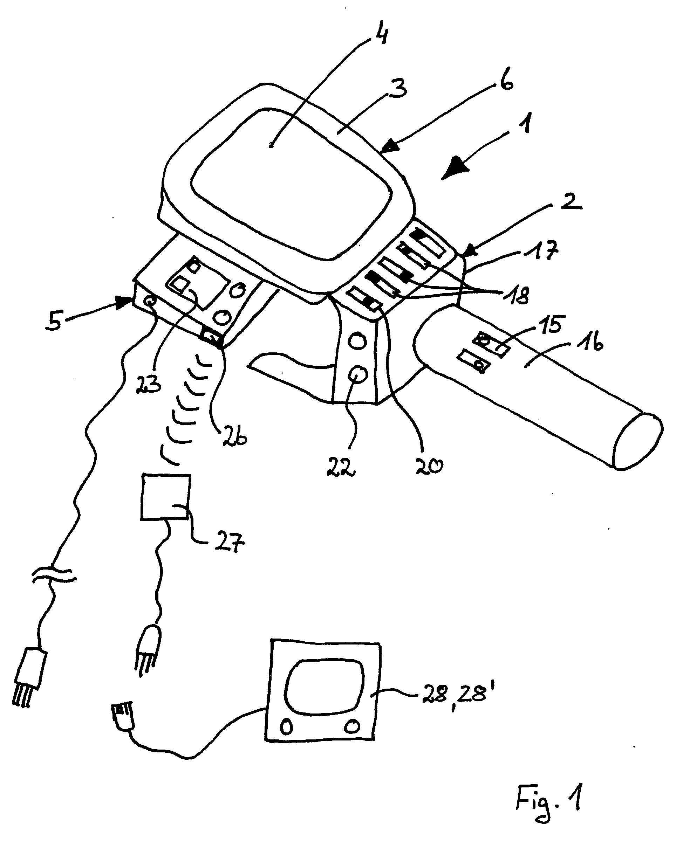

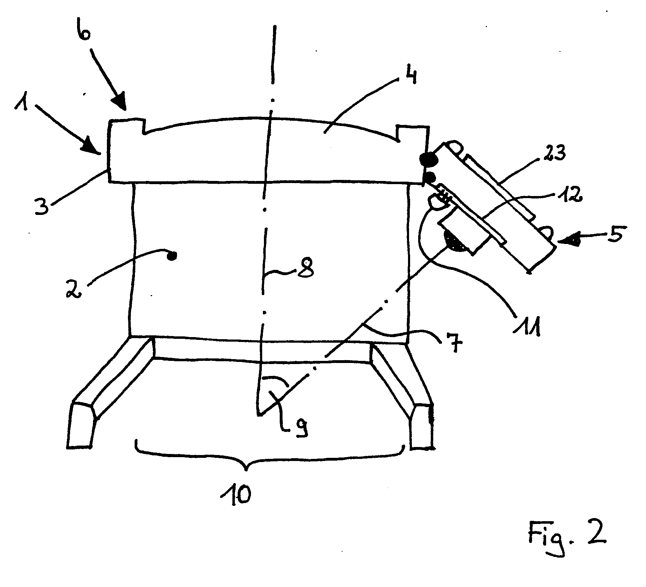

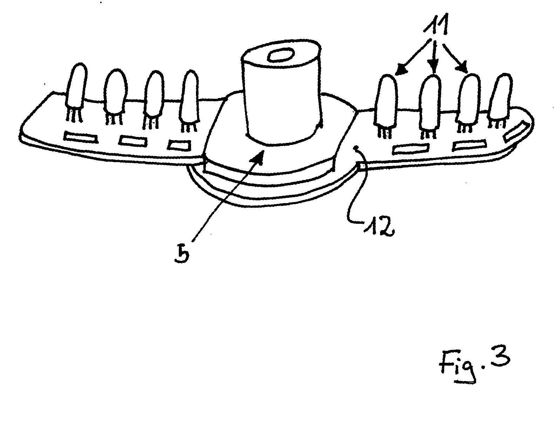

Die Erfindung ist anhand von Ausführungsbeispielen in den Zeichnungsfiguren näher erläutert. Diese zeigen : Fig. 1 eine perspektivische Ansicht einer als Hand- /Standlupe ausgebildeten optischen Sehhilfe ; Fig. 2 eine Frontansicht der Sehhilfe gemäß Fig. 1 ; Fig. 3 eine Detailansicht eines Trägers mit LED-Beleuchtung und Kamera.

Die Standlupe 1 weist ein Gehäuse 2 auf, das einen rahmenartigen Abschnitt 3 hat, in dem ein Lupenglas 4 befestigt ist. Am Gehäuse 2 ist ein elektronisches bilderfassendes System in Form einer Kamera 5 angeordnet, die als Farbkamera ausgebildet ist und seitlich, d. h. peripher an einem Lupenträger 6 befestigt ist.

Die optische Achse 7 der Kamera 5 schließt zu optischen Achse 8 des Lupenglases 4 einen Winkel 9 ein, so daß der von der Kamera 5 erfaßte Bildausschnitt 10 im wesentlichen dem von dem Lupenglas 4 erfaßten Bildausschnitt 10 entspricht.

Am Gehäuse 2 ist außerdem eine LED-Beleuchtung 11, nämlich ein Farb-LED-Beleuchtung angebracht, wobei die Elemente der LED-Beleuchtung 11 zusammen mit der Kamera 5 auf einem gemeinsamen, plattenartigen Träger 12 befestigt sind, der nach Art einer Leiterplatte ausgebildet ist. Der Träger 12 ist austauschbar an einem Abschnitt des Gehäuses 2 befestigt.

Die optische Sehhilfe weist ferner eine manuell bedienbare Kontraststeuereinrichtung 15 auf, die an einem Handgriff 16 des Gehäuses oder an einer gesonderten Gehäuseeinheit 17 befestigt sein kann und mit der Kamera 5 zusammenwirkt. Die Konstraststeuereinrichtung kann dazu dienen, elektronisch das aus der Kamera 5 kommende elektronische Bildsignal so zu bearbeiten, daß eine Konstrastverstärkung erfolgt oder ganz bestimmte Farben zur Konstrastverstärkung unterdrückt werden.

Zusätzlich oder alternativ kann ein Farbsteuerschalter 18 vorgesehen sein, durch den die Leuchtfarbe mindestens einer Farb-LED 19 der LED-Beleuchtung 11 verändert werden kann.

Zusätzlich oder alternativ kann ein Zoom-Schalter 20 vorgesehen sein, der die Brennweite des Zoomlinsensystems der Kamera ändert.

Eine Programmtaste 22 dient dazu, unterschiedliche Beleuchtungs-und/oder Kontrastprogramme der LED-Beleuchtung bzw. der Kamera 5 auszuwählen bzw. aufeinander abzustimmen.

Auf der Rückseite der Kamera 5 ist ein Kleinmonitor 23 in Form eines LCD-Monitors oder LCD-Displays vorgesehen, aus welchem unterschiedliche Programmzustände oder auch das von der Kamera erfaßte Bild zu Kontrolle durch die Bedienungsperson oder einer Hilfskraft eingestellt werden können. Mit 26 ist eine Sendeeinrichtung bezeichnet, durch welche die Signale der Kamera 5 drahtlos an einen Empfänger 27 übertragen werden können, an dem ein Fernsehgerät 28 oder ein Monitor 28'angeschlossen sein können.

Die Befestigung der Kamera 5 am Rand des Lupenglases 4 ist so getroffen, daß eine gegenseitige Verschwenkung der beiden Elemente möglich ist.

Darüber hinaus ist in der Kamera eine Elektronikschaltung vorgesehen, die ein Zittern, insbesondere ein Handzittern eliminiert. Derartige Elektronikschaltungen sind bei Videokameras und dergleichen Stand der Technik und bedürfen keiner weiteren technischen Beschreibung.

## Patentansprüche

1. Optische Sehhilfe, insbesondere Hand- oder Standlupe (1), bestehend aus einem Gehäuse (2), einem in einem Abschnitt des Gehäuses (2) befestigten, vergrößernden optischen Element (4), sowie einem am Gehäuse (2) angeordneten oder daran ansetzbaren elektronischen bilderfassenden System in Form einer Kamera (5), wobei
die Kamera (5) als Farbkamera ausgebildet ist, wobei der von der Kamera (5) erfaßte Bildausschnitt (10) innerhalb des von dem Lupenglas (4) erfaßten Bildausschnitt (10) liegt oder diesem entspricht, **dadurch gekennzeichnet, daß** die Sehhilfe eine Farb-LED-Beleuchtung aufweist, deren Elemente zusammen mit der Kamera (5) auf einem gemeinsamen Träger (12) befestigt sind.

2. Optische Sehhilfe nach Anspruch 1,
**dadurch gekennzeichnet, daß**
der Träger (12) als Leiterplatte ausgebildet ist.

3. Optische Sehhilfe nach Anspruch 1 oder 2,
**dadurch gekennzeichnet, daß**
die Kamera (5) peripher an einem Lupenträger (6) befestigt ist.

4. Optische Sehhilfe nach einem der vorhergehenden Anspruche,
**dadurch gekennzeichnet, daß**
die optische Achse (7) der Kamera (5) zur optischen Achse (8) des Lupenglases (4) einen Winkel (9) einschließt

5. Optische Sehhilfe nach einem der vorhergehenden Ansprüche,
**dadurch gekennzeichnet, daß**
der Träger (12) austauschbar ist.

6. Optische Sehhilfe nach einem der vorhergehenden Ansprüche,
**dadurch gekennzeichnet, daß**
sie eine manuell betätigbare Kontraststeuereinrichtung (15) aufweist, die an einem Handgriff (14) oder an einer gesonderten Gehäuseeinheit (17) ist und mit der Kamera (5) zusammenwirkt.

7. Optische Sehhilfe nach einem der vorhergehenden Ansprüche,
**dadurch gekennzeichnet, daß**
sie einen Farbsteuerschalter (18) aufweist.

8. Optische Sehhilfe nach einem der vorhergehenden Ansprüche,
**dadurch gekennzeichnet, daß**
die Leuchtfarbe der mindestens einem Farb-LED der LED-Beleuchtung (11) mittels des Farbsteuerschalter (18) änderbar ist.

9. Optische Sehhilfe nach einem der vorhergehenden Ansprüche,
**dadurch gekennzeichnet, daß**
sie einen die Brennweite des Linsensystems der Kamera (5) verändernden oder eine elektronische Vergrößerungsfunktion beeinflussenden Zoom-Schalter (20) aufweist.

10. Optische Sehhilfe nach einem der vorhergehenden Ansprüche,
**dadurch gekennzeichnet, daß**
sie mindestens eine Programmtaste (22) aufweist, mit welcher unterschiedliche Beleuchtungs-und/oder Kontrastprogramme der Kamera (5) auswählbar sind.

11. Optische Sehhilfe nach einem der vorhergehenden Ansprüchen,
**dadurch gekennzeichnet, daß**
an der Kamera (5) oder arm Gehäuse (2) der Sehhilfe ein Kleinmonitor (23) befestigt ist.

12. Optische Sehhilfe nach einem der vorhergehenden Ansprüche,
**dadurch gekennzeichnet, daß**
sie eine Sendeeinrichtung (26) aufweist, durch welche die Signale der Kamera (5) drahtlos an einen an ein Fernsehgerät (28) oder einem Monitor (28) angeschlossenen Empfänger (27) übertragbar sind.

13. Optische Sehhilfe nach einem der vorhergehenden Ansprüche,
**dadurch gekennzeichnet, daß**
die Kamera (5) schwenkbar am Rand des Lupenglases (4) befestigt ist.

14. Optische Sehhilfe nach einem der vorhergehenden Ansprüche,
**dadurch gekennzeichnet, daß**
die Kamera (5) mit einer ein Zittern eliminierenden Elektronikschaltung versehen ist.

## Claims

1. Optical visual aid, more especially a hand-held or fixed magnifier (1), comprising a housing (2), a magnifying optical element (4) mounted in one portion of the housing (2), and an electronic picture-taking system, in the form of a camera (5), which is disposed on the housing (2) or is attachable thereto, the camera (5) being in the form of a colour camera, the picture detail (10) determined by the camera (5) lying within the picture detail (10) determined by the magnifying glass (4) or corresponding thereto, **characterised in that** the visual aid has a colour LED illumination, the elements of which, together with the camera (5), are mounted on a common carrier (12).

2. Optical visual aid according to claim 1, **characterised in that** the carrier (12) is in the form of a printed circuit board.

3. Optical visual aid according to claim 1 or 2, **characterised in that** the camera (5) is peripherally mounted on a magnifier carrier (6)

4. Optical visual aid according to one of the preceding claims, **characterised in that** the optical axis (7) of the camera (5) forms an angle (9) with the optical axis (8) of the magnifying glass (4).

5. Optical visual aid according to one of the preceding claims, **characterised in that** the carrier (12) is exchangeable.

6. Optical visual aid according to one of the preceding claims, **characterised in that** it has a manually actuatable contrast control means (15), which is on a handle (14) or on a separate housing unit (17), and cooperates with the camera (5).

7. Optical visual aid according to one of the preceding claims, **characterised in that** it has a colour control switch (18).

8. Optical visual aid according to one of the preceding claims, **characterised in that** the luminous colour of the at least one colour LED of the LED illumination (11) can be altered by means of the colour control switch (18).

9. Optical visual aid according to one of preceding claims, **characterised** it has a zoom switch (20), which alters the focal length of the lens system of the camera (5) or influences an electronic enlargement function.

10. Optical visual aid according to one of the preceding claims, **characterised in that** it has at least one programme push-button (22), with which can be selected different illumination and/or contrast programs of the camera (5).

11. Optical visual aid according to one of the preceding claims, **characterised in that** a small monitor (23) is mounted on the camera (5) or on the housing (2) of the visual aid.

12. Optical visual aid according to one of the preceding claims, **characterised** it has a transmission means (26), by which the signals from the camera (5) can be transferred wirelessly to a receiver (27) connected to a television set (28) or to a monitor (28).

13. Optical visual aid according to one of the preceding claims, **characterised in that** the camera (5) is pivotably mounted on the edge of the magnifying glass (4).

14. Optical visual aid according to one of the preceding claims, **characterised in that** the camera (5) is provided with an electronic circuit which eliminates shake.

## Revendications

1. Aide visuelle optique, en particulier loupe à main ou sur pied (1), composée d'un boîtier (2), d'un élément optique grossissant (4) fixé dans une portion du boîtier (2) ainsi que d'un système d'acquisition d'images sous la forme d'une caméra (5), disposé sur le boîtier (2) ou pouvant être fixé sur celui-ci, la caméra (5) étant réalisée sous forme de caméra couleur, la portion d'image (10) acquise par la caméra (5) étant située à l'intérieur de la portion d'image (10) acquise par le verre de loupe (4) ou correspondant à celle-ci,
**caractérisée en ce que**
l'aide optique présente un éclairage à LED de couleurs dont les éléments sont fixés conjointement avec la caméra (5) sur un support commun (12).

2. Aide visuelle optique selon la revendication 1,
**caractérisée en ce que**
le support (12) est réalisé sous forme de carte à circuit imprimé.

3. Aide visuelle optique selon la revendication 1 ou 2,
**caractérisée en ce que**
la caméra (5) est fixée périphériquement sur un support de loupe (6).

4. Aide visuelle optique selon l'une des revendications précédentes,
**caractérisée en ce que**
l'axe optique (7) de la caméra (5) forme un angle (9) avec l'axe optique (8) du verre de loupe (4).

5. Aide visuelle optique selon l'une des revendications précédentes,
**caractérisée en ce que**
le support (12) est remplaçable.

6. Aide visuelle optique selon l'une des revendications précédentes,
**caractérisée en ce que**
elle présente un dispositif de commande de contraste (15) actionnable manuellement qui est disposé sur une poignée (14) ou sur une unité de boîtier séparée (17) et qui coopère avec la caméra (5).

7. Aide visuelle optique selon l'une des revendications précédentes,
**caractérisée en ce que**
elle présente un commutateur de commande de couleur (18).

8. Aide visuelle optique selon l'une des revendications précédentes,
**caractérisée en ce que**
la couleur d'éclairage de la LED de couleur au nombre d'au moins une de l'éclairage à LED (11) est modifiable au moyen du commutateur de commande de couleur (18).

9. Aide visuelle optique selon l'une des revendications précédentes,
**caractérisée en ce que**
elle présente un commutateur de zoom (20) modifiant la distance focale du système de lentilles de la caméra (5) ou influençant une fonction de grossissement électronique.

10. Aide visuelle optique selon l'une des revendications précédentes,
**caractérisée en ce que**
elle présente au moins une touche de programme (22) avec laquelle différents programmes d'éclairage et/ou de contraste de la caméra (5) peuvent être sélectionnés.

11. Aide visuelle optique selon l'une des revendications précédentes,
**caractérisée en ce que**
un mini-moniteur (23) est fixé sur la caméra (5) ou sur le boîtier (2) de l'aide visuelle.

12. Aide visuelle optique selon l'une des revendications précédentes,
**caractérisée en ce que**
elle présente un dispositif d'émission (26) qui permet de transmettre sans fil les signaux de la caméra (5) à un récepteur (27) connecté à un téléviseur (28) ou un moniteur (28).

13. Aide visuelle optique selon l'une des revendications précédentes,
**caractérisée en ce que**
la caméra (5) est fixée de manière pivotante au bord du verre de loupe (4).

14. Aide visuelle optique selon l'une des revendications précédentes,
**caractérisée en ce que**
la caméra (5) est pourvue d'un circuit électronique éliminant un tremblement.
